# EUROPÄISCHE PATENTANMELDUNG

(11) **EP 0 736 340 A1**
(43) Veröffentlichungstag der Anmeldung: **09.10.1996**
(21) Anmeldenummer: 95105299.2
(22) Anmeldetag: 07.04.1995
(51) Int. Cl.: B09B 3/00

(54) **Aufbereitung und Wiederverwendung von beschichteten Bändern, Folien und dgl.**

(71) Anmelder: Stanke, Antje, D-85521 Ottobrunn (DE); Eghbal-Ketabtchi, Hamid, D-80995 München (DE)
(72) Erfinder: Stanke, Antje, D-85521 Ottobrunn (DE); Eghbal-Ketabtchi, Hamid, D-80995 München (DE)
(74) Vertreter: Haft, von Puttkamer, Berngruber, Czybulka

(57) **Zusammenfassung**

Bandförmige Aufzeichnungsträger, wie Videobänder, Magnettonbänder, Datenbänder, Filmbänder sowie Folien, wie Druckfolien oder dgl. werden als Ausgangsstoff für reißfeste Bänder und aus diesen hergestellte, reißfeste, aus mehreren miteinander vereinigten Bändern bestehende Materialien verwendet.

## Beschreibung

Computerbänder, Video- und Audiobänder sind zwar zur mehrfachen Bespielung ausgelegt, da die Information in der variablen magnetischen Codierung der Beschichtung gespeichert wird. Diese Beschichtung ist mit dem Trägermaterial verbunden, wobei es verschiedene Arten von Verbindungstechnik und von Beschichtung gibt. Insbesondere bei Anwendungen mit hohen Qualitätsansprüchen ist nach einem vorgeschriebenen Zyklus oder beim Auftreten von Beschädigungen eine Weiterverwendung nicht mehr möglich.

Bei Offset-Druckvorlagen, Filmen und Filmfolien ist eine Mehrfachnutzung ausgeschlossen: bei diesen Informationsträgern ist die Information bleibend mit dem Trägermaterial verbunden.

Aus den genannten Gründen werden regelmäßig bei diesen beiden Gruppen von Informationsträgern große Mengen an nicht mehr Benötigtem aussortiert und fallen zur Entsorgung an.

Bekannt sind Verfahren, um Cassetten in ihre Bestandteile zu zerlegen und getrennt nach Material zu sortieren sowie die Gehäuse und Spulen dann - eventuell als Rohstoff - wieder zu verwenden. Bisher war die generelle Weiterverwendung des Informationsträgers ungelöst.

Computerbänder, Video- und Audiobänder sind mit magnetisierbaren Verbindungen beschichtet. Diese Verbindungen sind stabil und in der vorliegenden Gebrauchsform sowie auch als etwaiger Abrieb nicht unweltschädlich; in kleinen Mengen können die Bänder auch dem Hausmüll beigegeben und ggf. verbrannt werden. Fur ein Recycling wäre die Abtrennung der Beschichtung (teils Schwermetall-, teils Halogenverbindungen) vom Trägermaterial erforderlich, um so einen reinen Rohstoff zu erhalten. Diese Trennung müßte jedoch je nach Beschichtung unterschiedlich sein; sie erfordert also eine Sortierung nach Beschichtung, die nur mit unverhältnismäßig hohem Aufwand möglich wäre. Lediglich ein Hersteller ist bekannt, der seine Videocassetten nach einem speziellen Verfahren herstellt und entsprechend kennzeichnet, so daß er eine Rücknahme und Wiederverwendung für seine Produkte garantieren kann.

Für Filme und Folien sind Verfahren zur Vernichtung bekannt, jedoch keine Verfahren zur Wiederverwendung durch Aufbereitung.

Eine einfache Verbrennung großer Mengen von Computerbändern, Video- oder Audio-Cassetten sowie von Offset-Druckvorlagen, Filmen oder Filmfolien ist ausgeschlossen, da hierbei unzulässige Emissionen entstehen würden. Eine umweltverträgliche Verbrennung würde eine aufwendige Anlage erfordern.

Der Erfindung liegt die Aufgabe zugrunde, Computerbänder` Video- oder Audio-Cassetten sowie Offset-Druckvorlagen, Filme oder Filmfolien, die aus dem normalen Nutzungszyklus ausscheiden, zu entsorgen. Diese Entsorgung soll ohne schädliche Belastung von Luft und Grundwasser sowie ohne Deponie auskommen.

Diese Aufgabe wird durch die Merkmale des Patentanspruches 1 gelöst.

Bei der Erfindung wird somit aus dem Trägermaterial ein neues Produkt erzeugt, das nicht mehr als Ausgangsstoff für einen Informationsträger dient, sondern auf eine andere Art genutzt wird. Die unterschiedliche Art der Beschichtung ist dabei nicht störend.

Das hier beschriebene Verfahren macht sich die hohe Reißfestigkeit der Bänder, Filme und Folien zunutze, um Seile, Gewebe und Geflechte herzustellen. Es kommt ohne chemische Zusätze und ohne Verwendung von Wasser aus und erzeugt keine Emissionen und stellt keine Belastung von Boden und Grundwasser dar. Das Endprodukt ist chemisch beständig und wasserverträglich.

Die Erfindung geht davon aus, daß zunächst bei Bedarf, z.B. wenn das Ausgangsmaterial nur geringe Länge hat, ein "Endlos-Strang" beliebiger Länge erzeugt wird. Mehrere Computerbänder, Bänder aus Video- oder Audio-Cassetten bzw. mehrere Offset-Druckvorlagen, Filme oder Filmfolien werden dazu aneinandergefügt, z. B. verschweißt. Je nach Bedarf kann dieser Strang in der ennstehenden Breite belassen werden, oder er wird auf eine andere Breite geschnitten; er kann je nach beabsichtigter Weiterverwendung als Band erhalten bleiben oder als Faden verdrillt werden. Aus mehreren Fäden können Seile oder Zwirne erzeugt werden; Bänder, Fäden oder Zwirne können verwebt, verfochten oder anderweitig verknüpft werden.

Durch Wärme- oder Krafteinwirkung (Pressen, Recken) können diese Produkte so behandelt werden, daß das Material die neue Form dauerhaft annimmt. Bei den Geweben, insbesondere aus Bändern, kann durch Verschweißen oder formschlüssige Verbindung, z. B. Prägen, an den Berührungspunkten, z. B. Kett/Schuß-Kreuzungen, erreicht werden, daß trotz der glatten Oberflächen ein rutschfester, haltbarer Verband entsteht.

Die Anlieferung der Bänder, Cassetten, Filme und Folien erfolgt nur in den seltensten Fällen nach Arten sortiert und getrennt. Als erster Schritt zur Vorbereitung einer kontinuierlichen weiteren Bearbeitung ist daher eine Sortierung vorzunehmen, bei der das Ausgangsmaterial entsprechend den geometrischen Eigenschaften nach Typen getrennt und in ein erstes Zwischenlager für die einzelnen Typen übernommen wird. Dieses Verfahren entspricht dem Stand der Technik; es dient nicht dem in EP 0 516 060 A2 beschriebenen Zweck, bei eventuell vorhandenen Zumischungen von Fremstoffen in der Anlieferung die Quelle zu erfassen.

Bei Folien, aus Filmen oder aus Computerbändern (Einzelspulen) werden die Folien bzw. Filmrollen oder Computerbänder aus den ersten Zwischenlagern entnommen und blattweise bzw. rollenweise mit ca. 5 mm Überlappung (bei Folien vorzugsweise an den Schmalseiten, um die Zahl der Verbindungsstellen gering zu halten) aneinandergefügt. Durch Wärmeeinwirkung und/oder Druck werden sie durch Wärmeeinwirkung und/oder Druck (an das jeweilige Material angepaßte Parameter) verschweißt. In der Vorrichtung wird das zugeführte Material über einen Endschalter, eine Lichtschranke o. ä. geführt, so daß eine automatische Unterbrechung des Prozesses bei unterbrochener Zuführung möglich ist.

Nach dem Verschweißen wird das Produkt kontinuierlich auf eine Haspel aufgewickelt und je nach Bedarf sortiert in einem zweiten Zwischenlager zwischengelagert. Wenn der o. g. Endschalter anspricht, stoppt der Haspelantrieb.

Bei Cassetten (Mini-, Audio-, Video-Cassetten) werden die noch nicht zerlegten Cassetten aus den oben genannten ersten Zwischenlagern entnommen und mit gleicher Ausrichtung in einen Aufnehmer gestapelt und automatisch auf den Bandanfang zurückgespult.

Ein Teil der Vorrichtung erfaßt das Band, trennt es auf der Leerspulenseite ab und fuhrt den Bandanfang (über einen Endschalter o. ä., wie oben) an das Ende des vorhergehenden Bandes. Wie oben beschrieben, werden die Bänder durch Verschweißen zu beliebiger Länge verbunden, kontinuierlich auf eine Haspel aufgewickelt und je nach Bedarf im zweiten Zwischenlager zwischengelagert.

Die Folien, Filme und Bänder, die in größerem Format als gewünscht vorliegen, können - vorzugsweise nach dem Aneinanderfügen zu einem "Endlos"-band - kontinuierlich in Längsrichtung getrennt werden, um so z. B. Material von einheitlicher Breite zu erhalten.

Im folgenden werden mehrere Arten der Weiterverwendung angegeben.

### Herstellen von Geflechten unter Verwendung kompletter Folien

Folien lassen sich verstärken und/oder in ihrem Aussehen verändern, indem sie mit Streifen aus gleichem oder anderem Material (z. B. Bänder, Fäden oder Zwirne aus dem hier beschriebenen Verfahren) gemischt werden. Hierzu werden sie in einer Richtung (vorzugsweise in der Längsrichtung) mit Schlitzen versehen. Mindestens an einer Seite werden die Schlitze nicht bis zum Ende der Folie geführt, um den Zusammenhalt zu erhalten.

Die entstehenden Streifen können zur Erzielung besonders gewünschter optischer oder sonstiger Eigenschaften in sich verdrillt werden, oder sie werden gegenseitig ein-/mehrfach gekreuzt. Quer oder schräg zur Richtung der Schlitze werden die oben erwähnten Steifen eingebracht, so daß sie diese abwechselnd oberhalb und unterhalb kreuzen (flechten).

Das Verfahren dient nicht nur dazu, Muster zu erzeugen, sondern gibt den Folien auch einen größeren Widerstand gegen das Fortschreiten von Rissen. Außerdem lassen sich so mehrere Folien zu einem großen Verband aneinanderfügen, wobei sie bei geeigneter Wahl des Streifenmateriales eine hohe Festigkeit aufweisen. Durch das Schlitzen sind diese Produkte luft- und wasserdurchlässig.

### Weiterverarbeitung der Bänder durch Verdrillen und Verzwirnen, Herstellen von Fäden

Der Bandvorrat (ggf. Haspeln aus dem zweiten Zwischenlager oder Ausgangsmaterial aus dem ersten Zwischenlager) wird in eine Vorrichtung eingelegt, die so konstruiert ist, daß sie die Aufnahme mit dem Bandvorrat um eine Achse quer zur Wickelachse drehen kann. Gesteuert über die Geschwindigkeit des abgewickelten Bandes rotiert der Bandvorrat um diese Querachse und verdrillt dadurch das abgewickelte Band gleichförmig. Das Aneinanderfügen mehrerer Ausgangsmaterialien zu einem Produkt größerer Länge erfolgt hier vorzugsweise nicht automatisch, sondern manuell, z. B. mittels Prägezange oder beheizter Schweißzange.

Das verdrillte Band wird bedarfsweise duch einen temperaturstabilisierten Bereich geführt, in dem es so weit erwärmt wird, daß die inneren Spannungen weitgehend abgebaut werden und es die neue Form dauerhaft annimmt.

Eine weitere Möglichkeit zur Erzeugung eines fadenförmigen Produktes aus einem flachen Band ist das Aufbringen einer erhöhten Zugkraft, so daß das Material gereckt wird. Dies kann mit oder ohne vorhergehende Verdrillung erfolgen.

Der geschilderte Ablauf kann sinngemäß auch so erfolgen, daß gleichzeitig mehrere Bänder zu einem mehradrigen Faden verarbeitet werden können. Diese Methode erzeugt einen dicken Faden, bei dem die einzelnen Nahtstellen der Einzelbänder des Ausgangsmateriales nicht mehr gravierend sind. Dabei müssen die einzelnen Bestandtele nicht unbedingt aus dem gleichen Material bestehen.

Um ein aus mehreren Schichten bestehendes Ausgangsmaterial zu verarbeiten, ist die Vorrichtung hierfür in ihrer einfachsten Ausführung so konstruiert, daß sie mehrere Bänder parallel und flach aufeinanderführt und gemeinsam verdrillt bzw. reckt.

### Weiterverarbeitung der Bänder und Fäden zum Erzeugen von Zwirnen und Seilen

Der einfach gedrillte Faden hat bei geringer Aufheizung noch ein starkes Bestreben, die ursprüngliche Form - das flache Band - wieder anzunehmen; dafür hat er aber eine große Elastizität bzw. Dehnbarkeit. Zum Abbau der Tendenz, sich infolge der Torsionskräfte zu entdrillen, kann eine Verarbeitung von mehreren Fäden vorteilhaft sein.

Für diese Form des Endproduktes ist die Vorrichtung so ausgeführt, daß sie eine Art Zwirn oder Seil erzeugt, das aus mehreren einzelnen Fäden besteht. Hierfür werden entweder bereits im vorigen Arbeitsgang erzeugte Fäden verwendet, oder es werden direkt mehrere Einzelbänder oder mehrschichtige Lagen von Einzelbändern zugeführt und bei der Verarbeitung einzeln um ihre Längsrichtung verdrillt. Der nach dem Zusammenführen entstehende Strang wird um seine gemeinsame Längsachse gezwirnt bzw. entsprechend den Arbeitsschritten der Seilerei verarbeitet.

Dieser Vorgang kann beliebig oft wiederholt werden, um Seile beliebiger Dicke zu erzeugen. Die Biegsamkeit des Endproduktes kann über Zwischenschritte wie "Erwärmen" oder "Recken" gesteuert werden.

### Herstellen von Geflechten

Während Seile einen annähernd kreisförmigen Querschnitt haben, kann durch Flechten ein Produkt mit abgeflachtem bzw. annähernd rechteckigem Querschnitt erzeugt werden. Dieses weist dann auch eine der Anzahl der einzelnen Adern entsprechende Festigkeit auf, ist aber in einer Vorzugsrichtung leichter zu biegen.

### Herstellen von Geweben

Das Ausgangsmaterial muß nicht einheitlich sein. Durch Kombination verschiedener Materialien lassen sich unterschiedliche Eigenschaften oder optische Effekte erzielen. So kann ein breites Band aus Film- oder Folienrohstoff eine gute Transparenz aufweisen, die erwünschte Festigkeit wird durch die Einarbeitung von Fäden oder Zwirnen erzeugt.

Es wird eine dem herkömmlichen Webstuhl vergleichbare Vorrichtung verwendet. Wenn im folgenden Text der Einfachheit halber von Kett- und Schuß-"Fäden" gesprochen wird, so sind stets auch Bänder, Einzelfäden, Einfach- oder Mehrfachzwirne mitgemeint.

Die Kettfäden werden je nach gewünschter Eigenschaft des Endproduktes - also z. B. Muster, Festigkeit, Licht- oder Wasserdurchlässigkeit - angeordnet.

Für den Schußfaden werden ggf. Materialien verwendet werden, die sich wegen ihrer Eigenschaft (insbesondere: Biegsamkeit, Rauhigkeit bzw. Ungleichmäßigkeit der Oberfläche) oder wegen der zwangsläufigen Größe der Rollen evtl. nicht zur Unterbringung im Schiffchen eignen. In diesen Fällen wird stattdessen links und/oder rechts ein eigener Vorrat gelagert (bei entsprechenden Anforderungen an das Endprodukt/Muster auch mehrere verschiedene). Von dort nimmt eine Einrichtung, z.B. eine Klammer des Schiffchens den Anfang auf und schießt den Faden durch.

Die Andrückkraft des Kammes wird dem verwendeten Material und den gewünschten Eigenschaften des Endproduktes angepaßt. Für einen lockeren Verband wird sie so gewählt, daß die im Schuß eventuell eingearbeiteten Bänder nicht knicken bzw. daß eine bedarfsweise gewünschte Porosität (z. B. Luft- und Wasserdurchlässigkeit) entsteht. Für einen festen Verband ist eine entsprechend hohe Andrückkraft erforderlich.

Bei dem hier verwendeten Material reicht normalerweise die Reibung zwischen Kett- und Schußfäden (insbesondere bei lockeren Verbänden) nicht aus, um ein Verrutschen zu verhindern. Das Gewebe wird deshalb in seiner Form gesichert. Dies geschieht vorzugsweise direkt in der Webvorrichtung durch Kraft und/oder Wärmeeinwirkung an den Kreuzungen von Kett- und Schußfäden, wodurch diese verschweißt bzw. formschlüssig stabilisiert werden. Je nach Materialkombination und gewünschten Eigenschaften des Endproduktes kann es ausreichend sein, dies nur an wenigen Punkten auszuführen.

Während dieser Zwischenschritte ist der Zeugbaum arretiert, so daß das fertige Gewebe noch nicht aufgewickelt werden kann. Erst nachdem die oben beschriebenen Zwischenschritte ausgeführt sind und nachdem nun - soweit zutreffend - der Schußfaden von dem seitlich gelagerten Vorrat abgetrennt ist, erfolgt die Freigabe des Aufwickelantriebes. Gleichzeitig wird am Kettbaum die Nachfuhrung der Kettfäden ermöglicht.

### Herstellen von Netzen

Netze werden auf die gleiche Art erzeugt, wie dies auch bei Verwendung textiler oder künstlicher Ausgangsstoffe erfolgt.

### Detailbeschreibung der Erfindung

Bei der Weiterverarbeitung der Zwischenprodukte aus den unter 1. bis 7. beschriebenen Abläufen und bei den Nutzungs/Anwendungsmöglichkeiten der Endprodukte ist zu unterscheiden zwischen den reinen Zweckanwendungen zur Nutzung der physikalischen und chemischen Eigenschaften des Materiales und denen, die optisch bzw. stilistisch ansprechend sind.

Bei der Weiterverarbeitung von Bändern, Fäden, Zwirnen, Seilen und geflochtenen Strängen bieten sich als technische Zweckanwendungen an:
- Paketschnüre, Spanngurte, Hebe-, Halte- und Schleppseile aller Art;
- Ersatz von Draht an Zäunen (z. B. Weidezäune);
Anwendung für optisch ansprechende Artikel:
- Gürtel, Kordeln;
- Sichtschutz- bzw. Fliegenschutzvorhänge, z. B. an Terrassentüren.

Bei der Weiterverarbeitung von Geweben und Netzen bieten sich als technische Zweckanwendungen an:
- Abdeckmatten für Deponien, offene Container oder Materiallager, um zu verhindern, daß Teile vom Wind oder Fahrtwind weggetragen werden bzw. als Sichtschutz oder als Sicherung; stark luftdurchlässige Abdeckungen, sofern ein lockeres Gewebe verwendet wird;
- Sammelbehälter im Sanitär- und Krankenhausbereich (z. B. Schmutzwäsche);
- Fangnetze an Skipisten oder an Baustellen; Transportsicherung für die Ladung (Stückgut), z. B. im PKW, im LKW oder im Luftverkehr;
- Matten zum Schutz der Passanten an innerörtlichen Baustellen (Gerüstverkleidungen, die bei Verwendung von Film- oder Folienbändern auch durchlässig für Tageslicht sind, aber wegen des Aufbaues eine höhere Festigkeit haben und eine geringere Rißempfindlichkeit aufweisen als übliche Folien);
- Abdeckmatten, z. B. von Böschungen, gegen Erosion durch Wind und Wasser, wobei bei Verwendung eines lockeren Gewebes durch die Zwischenräume Regenwasser eindringen kann und den Pflanzenwuchs ermöglicht sowie bei Einarbeitung von Film- oder Folienbändern auch Sonnenlicht den Boden erreicht;
- Zwischenlage (Drainage) unter Deponien oder zur Trennung von Humusauftragung und Kiesschicht;
- Weiterverarbeitung zu ganz oder teilweise geschlossenen Gebinden (Säcke, Netze), in denen Waren oder Materialien transportiert werden können, oder die Waren oder Materialien langfristig umschließen (z. B. zum Einkauf; zUm Abpacken; im Küstenschutz als Sandsäcke, Schotterpakete für Faschinen).

Das Material kann auch für optisch ansprechende Artikel verwendet werden, z. B. als:
- Dekorationsmaterial, Sichtschutz, Verkleidungen;
- Ballfangnetze in Turnhallen und auf Sportplätzen.

Ausgangsmaterialien, die nicht in der oben beschriebenen Form genutzt wurden (da sie z. B. wegen unpassendem Format oder wegen Beschädigungen nicht geeignet erscheinen; Reste; Abfälle und Abschnitte) können ggf. einer anderen Nutzung zugeführt werden, die teilweise für die Wiederverwendung von Kunststoffen bekannt ist. Sie müssen hierfür nicht sortenrein getrennt vorliegen. Bei dieser Nutzungsform können daher auch Reste und Abschnitte aus dem oben beschriebenen Prozeß verwertet werden, ebenso wie zurückgenommene Endprodukte des beschriebenen Verfahrens. Ebenso können Kunststoffe aus anderen Quellen - z. B. Verpackungen - mitverwendet werden.

Hierbei werden die Bänder, Filme oder/und Folien sowie die Mischprodukte aus dem oben beschriebenen Prozeß gehäckselt, geschreddert oder granuliert und anschließend vermischt. Bei Einsatz (auch) von Kunststoffen aus anderen Quellen - z. B. Verpackungen - sind diese ggf. zur Vermeidung von Geruchsbelästigungen zu reinigen, was zweckmäßigerweise nach dem Zerkleinern und vor dem Vermischen erfolgt (bei diesem Schritt würde, anders als bei der oben beschriebenen Verwertung von Bändern, Filmen oder Folien, Wasser benötigt).

Es entsteht ein Gemenge mit lockerer Schüttdichte. Je größer der Vorratsbehälter ist bzw. je länger der Zeitraum ist, über den das Mischgut angesammelt wird, desto einheitlicher und gleichbleibender ist die Zusammensetzung des Gemisches. Die genaue Zusammensetzung des Gemisches ist allerdings keine wichtige Eigenschaft, solange an das entstehende Endprodukt keine besonderen Anforderungen gestellt werden.

Das Gemisch wird in eine Form gefüllt, die in ihrer einfachsten Ausführung einen Rahmen und zwei ebene Deckel hat. Die Wände sind - insgesamt oder teilweise - soweit beheizbar, daß die von diesen Wänden ausgehende Wärme die Randzonen des in die Form eingefüllten Gemisches plastifiziert und verschweißt. Dieser Vorgang kann durch gleichzeitige Aufbringung von Druck verstärkt werden. Dabei kann die Erzeugung des Druckes dadurch erfolgen, daß wenigstens eine Seite der Form beweglich ist und daß das Volumen innerhalb der Form verringert wird, oder daß Mischgut nachgefüllt wird.

Durch diese Maßnahmen wird das Material verdichtet. Wegen der Erwärmung der Außenfläche(n) wird hier eine Verschweißung erzielt. Dadurch werden die Häcksel im Inneren gebunden und die Form des Ganzen erhalten, obwohl die innenliegenden Teile nicht verschweißt sind. Dieser Materialaufbau bewirkt eine hohe Elastizität und gute Dämpfungs- sowie geringe Wärmeleit-Eigenschaften.

Das Produkt ist wegen der Unempfindlichkeit gegen Wasser und die meisten Chemikalien vielseitig einsetzbar als Isoliermaterial, Verpackung oder Abdeckung. Es kann in Bahnen verwendet werden oder als Formteil.

## Patentansprüche

1. Verwendung von zur Aufzeichnung von Daten, Signalen oder Bildern beschichteten bandförmigen Aufzeichnungsträgern, wie Videobändern, Magnettonbändern, Datenbändern, Filmbändern sowie Folien, wie Druckfolien oder dgl. als Ausgangsstoff für reißfeste Bänder und aus diesen hergestellte reißfeste, aus mehreren miteinander vereinigten Bändern bestehenden Materialien.

2. Verfahren nach Anspruch 1, dadurch gekennzeichnet, daß die Bänder vor ihrer Vereinigung zu dem reißfesten Material vorbehandelt werden.

3. Verwendung nach Anspruch 2, dadurch gekennzeichnet, daß die Bänder zu einem Endlosband zusammengefügt und auf einheitliche Breite geschnitten werden.

4. Verwendung nach einem der vorhergehenden Ansprüche, dadurch gekennzeichnet, daß die Bänder zu Fäden verdrillt werden.

5. Verwendung nach Anspruch 4, dadurch gekennzeichnet, daß die Bänder beim Verdrillen einer Zugbelastung ausgesetzt oder einer thermischen Behandlung unterzogen werden.

6. Verwendung nach einem der vorhergehenden Ansprüche, dadurch gekennzeichnet, daß die Bänder unbehandelt bzw. vorbehandelt miteinander verzwirnt oder verwebt werden.

7. Verwendung nach einem der vorhergehenden Ansprüche, dadurch gekennzeichnet, daß die unbehandelten oder vorbehandelten Bänder in einem Gewebemuster angeordnet und an den Kreuzungsstellen zweier oder mehrerer Bänder diese miteinander verbunden, vorzugsweise verschweißt oder verklebt werden.
